# EUROPEAN PATENT SPECIFICATION

(11) **EP 1 375 116 B1**
(45) Date of publication and mention of the grant of the patent: **19.04.2006**
(21) Application number: 03014079.2
(22) Date of filing: 23.06.2003
(51) Int. Cl.: B29C 70/54, B29C 70/44, B29C 70/48

(54) **Method of molding fiber reinforced resin article and fiber reinforced resin article**
Verfahren zum Formen eines faserverstärkten Kunstharzgegenstandes sowie faserverstärkter Kunstharzgegenstand
Procédé pour moulage d'un article en résine renforcée par des fibres et article en résine renforcée par des fibres

(30) Priority: 21.06.2002 JP 2002180688; 18.06.2003 JP 2003173163
(43) Date of publication of application: 02.01.2004
(73) Proprietor: YAMAHA HATSUDOKI KABUSHIKI KAISHA, Iwata-shi Shizuoka-ken (JP)
(72) Inventor: Morozumi, Naohiro, Iwata-shi, Shizuoka-ken (JP); Suzuki, Yasuo, Iwata-shi, Shizuoka-ken (JP)
(74) Representative: Grünecker, Kinkeldey, Stockmair & Schwanhäusser Anwaltssozietät

(56) References cited:
- EP-A- 0 270 411
- US-A- 3 309 450

## Description

The present invention relates to a method of molding a fiber reinforced resin article according to the preamble part of the independent claim 1, and to a fiber reinforced resin article according to the preamble part of the independent claim 2.

Hitherto, a fiber reinforced resin article such as a hull of a water jet propulsion boat has been produced by placing fiber mats in a mold, injecting a resin into the mold, allowing the resin to flow into the fiber mats so that the mats are impregnated with the resin to form a molded article.

In view of the problems in manufacture, the fabrication using a mold produces an article having a size permitting the fabrication with a single fiber mat and, thus, is subject to a limitation in the size of the mat. Therefore, it has been difficult to produce a large-sized molding.

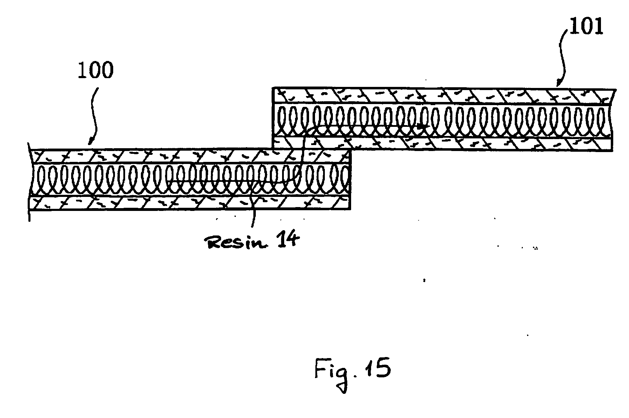

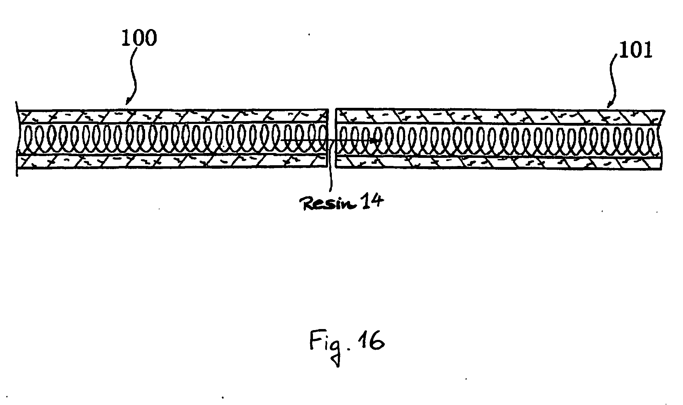

That is, as shown in FIG. 15, when fiber mats 100 and 101 overlap with each other at their end portions, the injected resin 14 cannot smoothly flow through the overlapping portion, thereby causing a defect. Additionally, when the fiber mats are disposed in an abutting fashion as shown in FIG. 16 rather than the overlapping fashion, reinforcement is insufficient, thereby causing reduction of strength.

Since the molding is produced by injecting a resin 14 after at least one fiber mat has been placed in a mold, a feed port and a discharge port are controlled such that the resin 14 can smoothly flow. However, there is a further problem that the control is more difficult as the shape of the article is more complicated.

From US-A-3,309,450 a method of laminating reinforced plastics and a fiber reinforced resin article as indicated above are known. In particular, two layers of reinforced fiber material have been arranged into a mold device with a rigid mold part, a flexible mold part, a resin inlet passage and an air outlet passage.

Here, a layer of heat insulating material has been arranged between the two layers of reinforcing fiber material, wherein the layer of heat insulating material comprises grooves provided on both surfaces of the layer, so that the injected resin flows through the layer and then passes more slowly from the layer into the layers.

The present invention has been made in view of the above circumstance, and it is an objective of the present application to improve a method of molding a fiber reinforced resin article as indicated above so as to be capable of molding a fiber reinforced resin article with a large size.

It is another objective of the present invention to improve a fiber reinforced resin article as indicated above so as to have a large size.

The objective is solved according to the present invention by a method of molding a fiber reinforced resin article, comprising the steps of placing at least one fiber mat consisting of two surface fiber layers and a middle fiber layer in a mold; injecting a resin into said mold; and impregnating said fiber mat with said resin to form said article, wherein there are provided the steps of disposing plural fiber mats in said mold so that end portions thereof overlap mutually, and forming a connection part in said fiber mat so as to allow a flow of said resin therethrough, wherein said connection part consists of a sewing of overlapping portions or a cut in two adjacent surface fiber layers, or of a connecting fiber mat or a through-hole, or of a member penetrating said fiber layers, or of a member placed on one of the surface fiber layers of the fiber mat for forming resin flow passage.

Moreover, the objective is solved according to the product aspect of the present invention by a fiber reinforced resin article comprising a plurality of fiber mats embedded in said resin body, wherein end portions of said fiber mats are overlapped mutually with one another, and resin flow supporting means is provided in an area of said overlapping end portions of said fiber mats, wherein said resin flow supporting means is a sewing of overlapping portions, or a cut in two adjacent surface fiber layers, or a connecting fiber mat, or a through-hole, or a member penetrating said fiber layers, or a member placed on one of the surface fiber layers of the fiber mat for forming resin flow passage.

Here, it is an advantage that the resin can flow smoothly by controlling the direction of the resin flow on the fiber mat, so that an article having a complicated shape can be produced.

In accordance with the present invention, since means for allowing the resin to flow is provided in the overlapping portions of the plural fiber mats, the resin to be impregnated into the fiber mats can smoothly flow therethrough. Therefore, it is possible to mold a large-sized fiber reinforced resin article without causing reduction of strength and, accordingly, a large-sized fiber reinforced resin article having strength in the overlapping portions is obtainable.

According to a further preferred embodiment, said fiber mat consists of two surface fiber layers and a middle fiber layer, wherein the injected resin is supplied to the middle fiber layer by said means.

That means that said means for allowing the flow of the resin through the overlapping portions may be constructed by sewing the overlapping portions of the end portions of the fiber mats together. Further, said means for allowing the flow of the resin through the overlapping portions may be constructed by connecting the overlapping portions of the end portions of the fiber mats with a connecting fiber mat. Thus, the overlapping portions of the end portions of the fiber mats can be firmly connected together and a smoothly flow of the resin through the overlapping portions has been allowed. Moreover, said means for allowing the flow of the resin through the overlapping portions may be constructed by disposing a through-hole in the area of the overlapping portions of the end portions of the fiber mats. Thus, the resin is allowed to flow easily and smoothly by the through-hole formed in the overlapping portions of the end portions of the fiber mats. Furthermore, said means for allowing the flow of the resin may be constructed by placing a resin flow passage forming member on a surface of the fiber mat. Further, said connecting part may be consisted of a cut in two adjacent surface fiber layers or of a connecting fiber mat or of a member penetrating said fiber layers for forming resin flow passage.

Further preferred embodiments of the present invention are laid down in the further subclaims.

In the following, the present invention is explained in greater detail by means of several embodiments thereof in conjunction with the accompanying drawings, wherein:
FIG. 1 is a plan view of an upper hull of a water jet propulsion boat.
FIG. 2 is a side view of the upper hull of the water jet propulsion boat.
FIG. 3 shows a state in which a mold is opened.
FIG. 4 shows a state in which the mold is closed.
FIG. 5 is a perspective view of the mold in which the arrangement of the fiber mat in the mold has been shown.
FIG. 6 shows a connection part of plural fiber mats.
FIG. 7, 8 and 9 show further embodiments of the connection part of plural fiber mats.
FIG. 10 is a further perspective view of the mold in which the arrangement of the fiber mat in the mold has been shown.
FIG. 11 is a plane view of the fiber mat arranged at a plane portion of the mold.
FIG. 12. is a plane view of the fiber mat arranged at a length portion of the mold.
FIG. 13 is a sectional view of the XII-XII line of the Fig. 11.
FIG. 14 shows a state of pouring the resin of the portion of the length and plane portion of the fiber mat.
FIG. 15 shows a state according to the prior art in which a resin flows through plural fiber mats with their end portions overlapping with one another.
FIG. 16 shows a state according to the prior art in which a resin flows through plural fiber mats with their end portions abutting against one another.

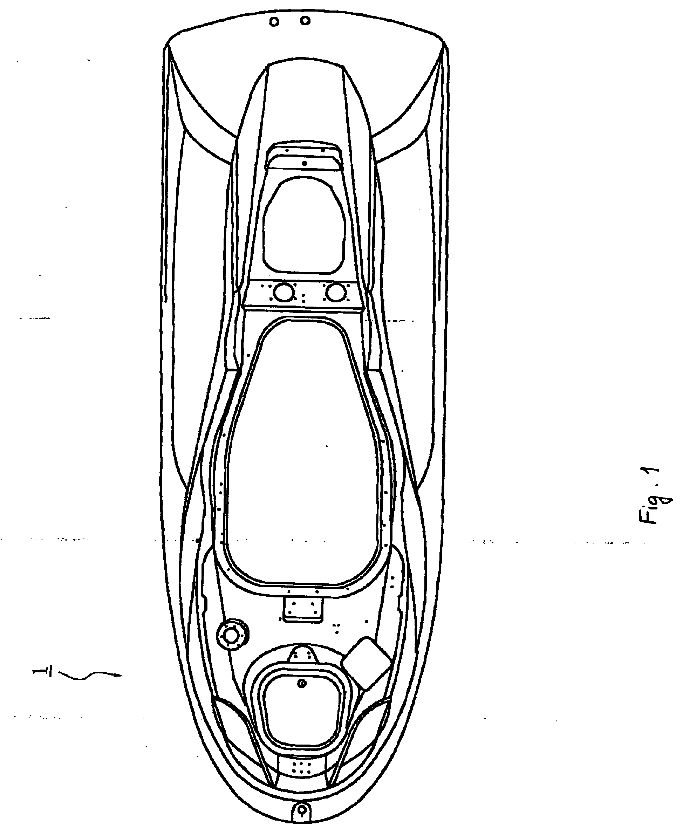

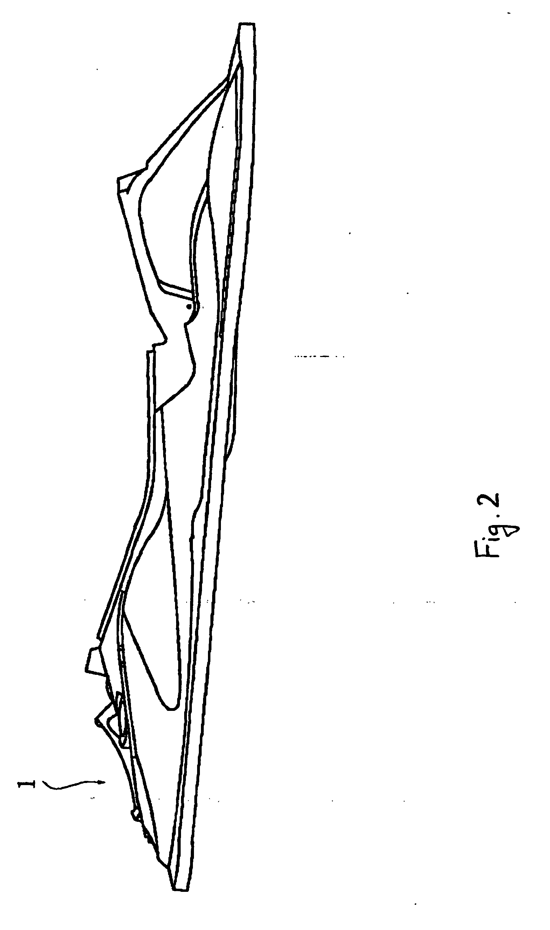

FIG. 1 is a plan view of an upper hull of a water jet propulsion boat and FIG. 2 is a side view of the upper hull of the water jet propulsion boat.

In this embodiment, an upper hull of a water jet propulsion boat is illustrated as an example of the fiber reinforced resin article 1. The upper hull of the fiber reinforced resin article 1 is produced by placing fiber mats 12 in a mold, injecting a resin 14 into the mold, allowing the resin 14 to flow into the mats 12 so that the mats 12 are impregnated with the resin 14 to form a molded article.

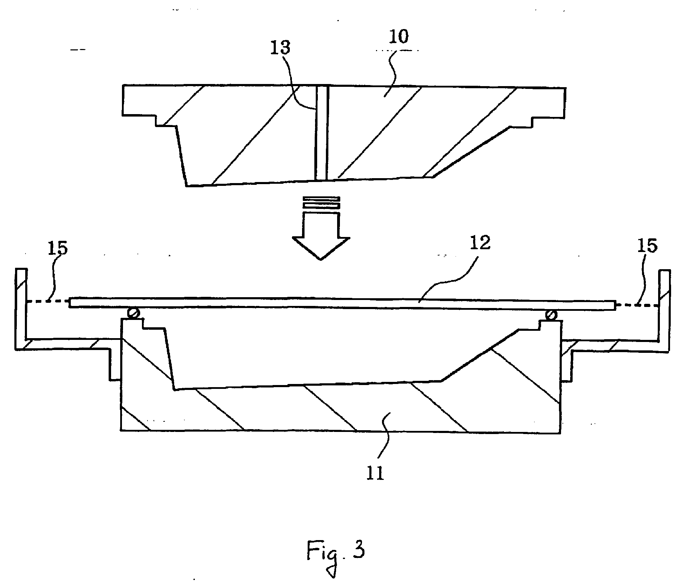

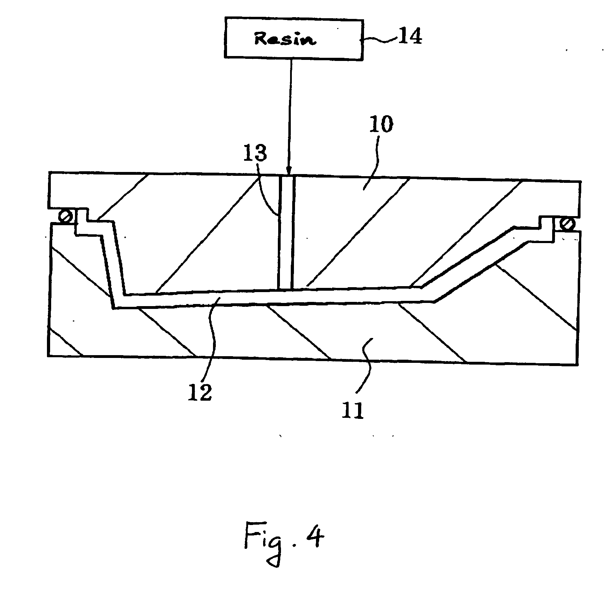

FIG. 3 and FIG. 4 depict a molding process for a fiber reinforced resin article. FIG. 3 shows a state in which a mold is opened, while FIG. 4 shows a state in which the mold is closed.

In this embodiment, an upper mold 10 and a lower mold 11 are used. As shown in FIG. 3, a fiber mat 12 is placed on the lower mold 11. While controlling the tension by means of tension controlling members 15, the upper mold 10 is inserted into the lower mold 11. As shown in FIG. 4, the fiber mat 12 is sandwiched between the upper mold 10 and the lower mold 11. A resin 14 is injected through an injection hole 13 of the upper mold 10 and is allowed to flow and impregnate into the fiber mat 12 to form a molded article. As the fiber mat 12, a glass fiber mat, for example, is used.

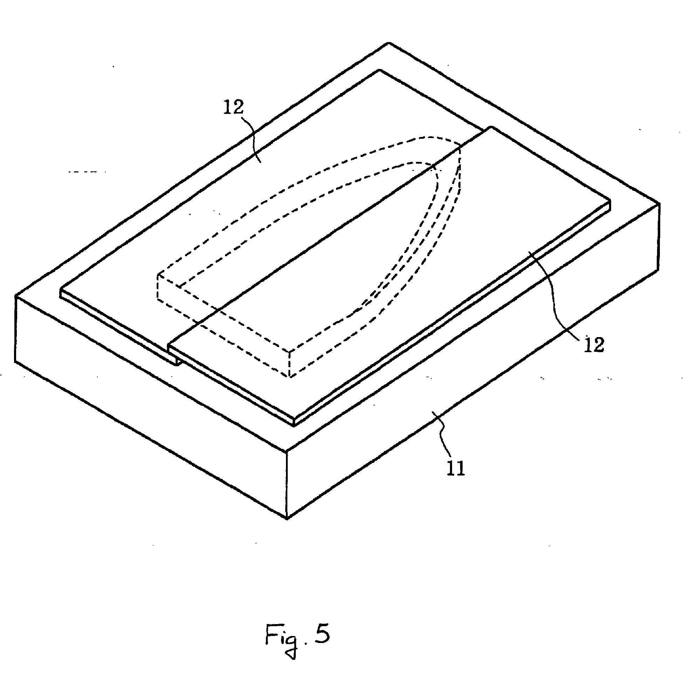

As shown in FIG. 5 a preferred arrangement of two fiber mats 12 in the lower mold 11 in an open state of the mold is shown, wherein in the middle of the lower mold 11 the end portions of the fiber mats 12 overlap each other.

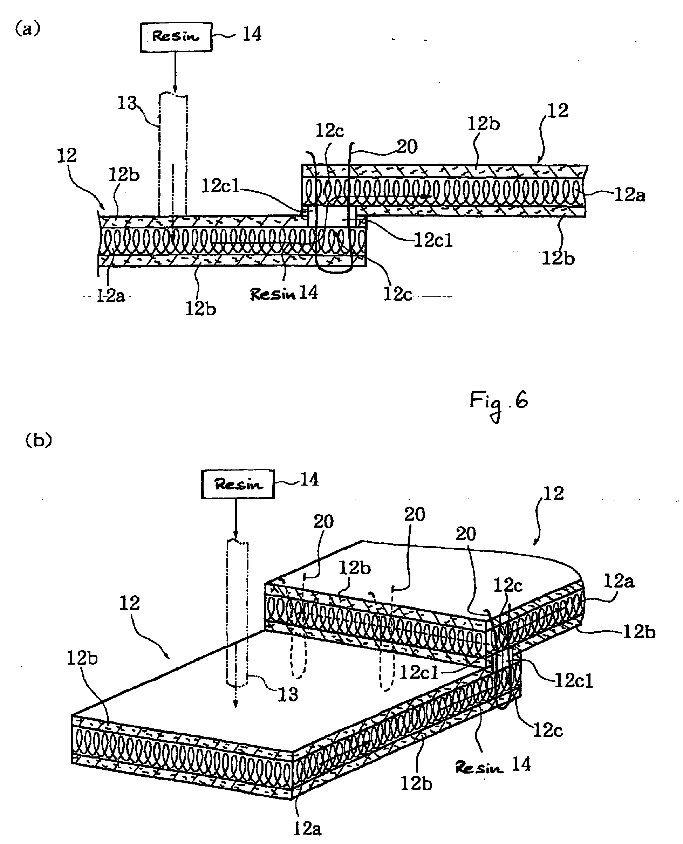

As shown in FIG. 6 through FIG. 9, preferred embodiments are shown, in which the end portions of the plural fiber mats 12 overlap mutually. Here the fiber mat 12 consists of two surface fiber layer 12b and a middle fiber layer 12a, and a connection part 12c and, accordingly, a resin flow supporting means is provided in an area of the overlapping portion of the end portions of the fiber mats 12.

In FIG. 6 since the end portions of the fiber mats 12 overlap each other, two surface fiber layers 12b are disposed adjacent to each other so as the connection part 12c and, accordingly, the resin flow supporting means consists of a cut 12c1 in the two adjacent surface fiber layers 12b and the overlapped end portions are fastened to each other by strings 20. The resin 14 is supplied to one of the middle fiber layers 12a through the injection hole 13 and the resin 14 is allowed to flow smoothly from the one middle fiber layer 12a to the other middle fiber layer 12a by means of the cut 12c1 in the two adjacent surface fiber layers 12b so that the resin 14 could impregnate the middle fiber layers 12a.

As a consequence, a large-sized fiber reinforced resin article can be formed without causing reduction of strength. Furthermore, the fiber mats 12 and in particular the middle fiber layers 12a could be sufficiently impregnated without a defect.

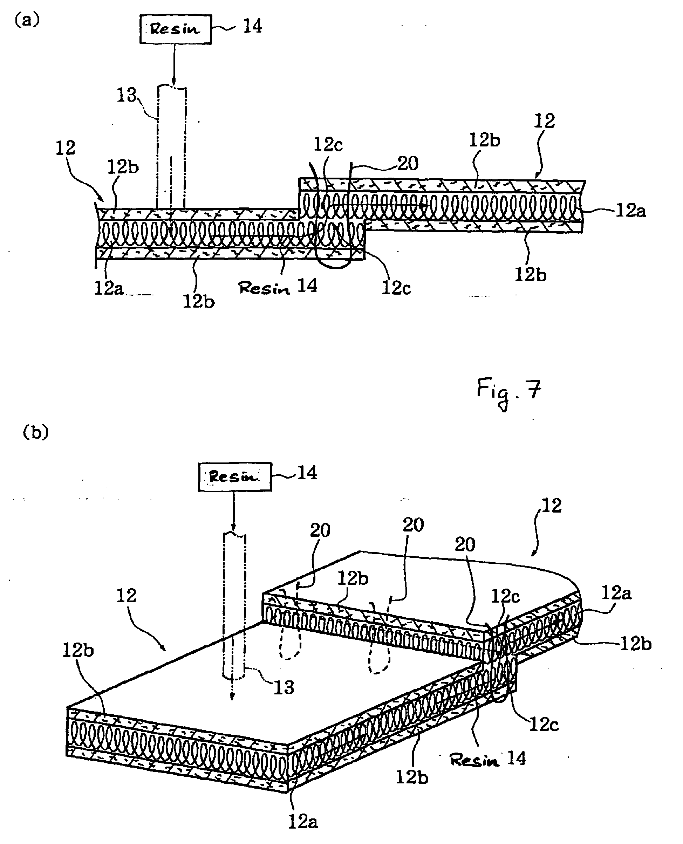

Means for allowing the resin 14 to flow as shown in the preferred embodiment of FIG. 7 is constructed by sewing the overlapping portions of the end portions of the fiber mats 12 together with the string 20, in particular the two adjacent surface fiber layers 12c in the area of the overlapping portions have been removed, whereby a simple structure has been provided. By this seam, the end portions are tightly adhered to one another so that the resin 14 can smoothly flow therethrough.

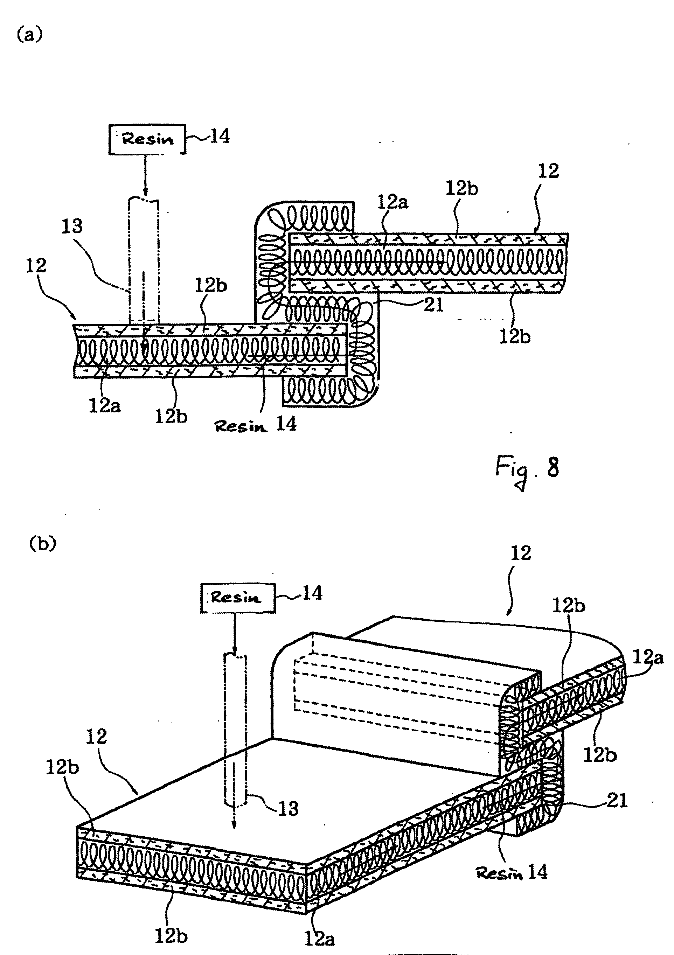

According to a preferred embodiment as shown in FIG. 8, the overlapping portions of the end portions of the fiber mats 12 are connected to each other by a connecting fiber mat 21. Here the connecting fiber mat 21 consists of a middle fiber layer only, so that the resin 14 could flow from the middle fiber layer 12a of one fiber mat 12 over the connecting fiber mat 21 to the middle fiber layer 12a of the other fiber mat 12.

It is advantageously when a density of the connecting fiber mat 21 lower than the density of the surface fiber layers 12b or equal to the density of the middle fiber layers 12a connected by the connecting fiber mat 21. Due to the aforesaid facts the flow of the resin 14 from one middle fiber layer 12a to the other has been facilitated.

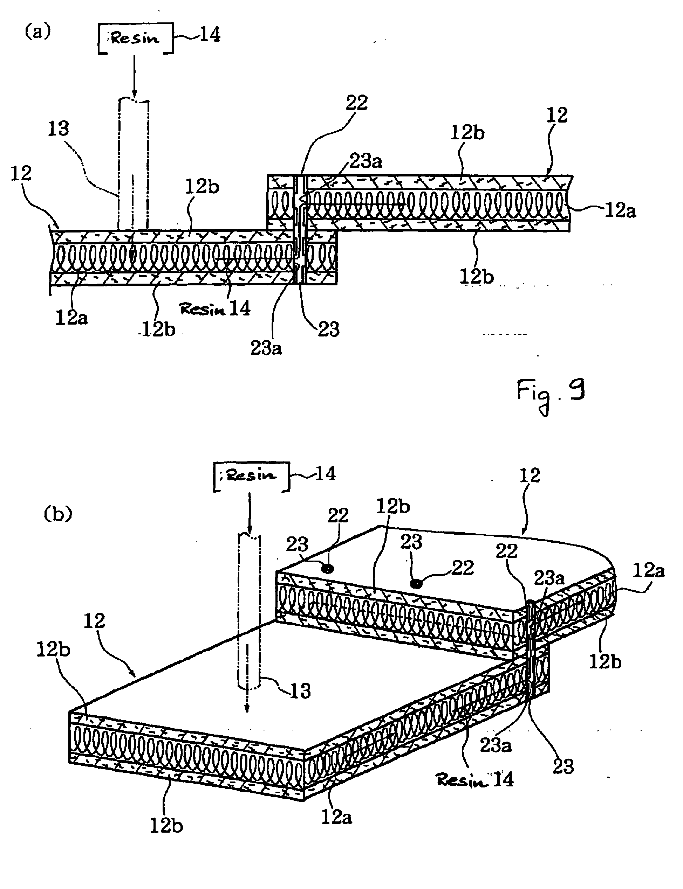

In order to allow the flow of the resin 14 through the fiber mat 12 smoothly, through-hole 22 or a member 23 penetrating resin 14 are provided at an area of the overlapping portions of the end portions of the fiber mats 12 so that the respective middle fiber layers 12a have been connected to each other with a simple structure. As shown in FIG. 9, for example, the member 23 consists of a fiber stick, a flexible pipe comprising opened hole 23a at a position of the respective middle fiber mats 12a, or a meshes-of-a-net pipe. According to this preferred embodiment, the resin 14 flows from the injection hole 13 over one of the middle fiber mat 12a to the opened hole 23a of the member 23. From the opened hole 23a of the member 23 the resin 14 flows further within the member 23 to the other opened hole 23a of the member 23 and from there to the other middle fiber mat 12a. Through the form and the arrangement of the member 23 a smooth flow of the resin 14 through the middle fiber mats 12a has been allowed.

Here the through-holes 22 or members 23 are arranged in determined intervals along the area of the overlapping portions of the end portions of the fiber mats 12.

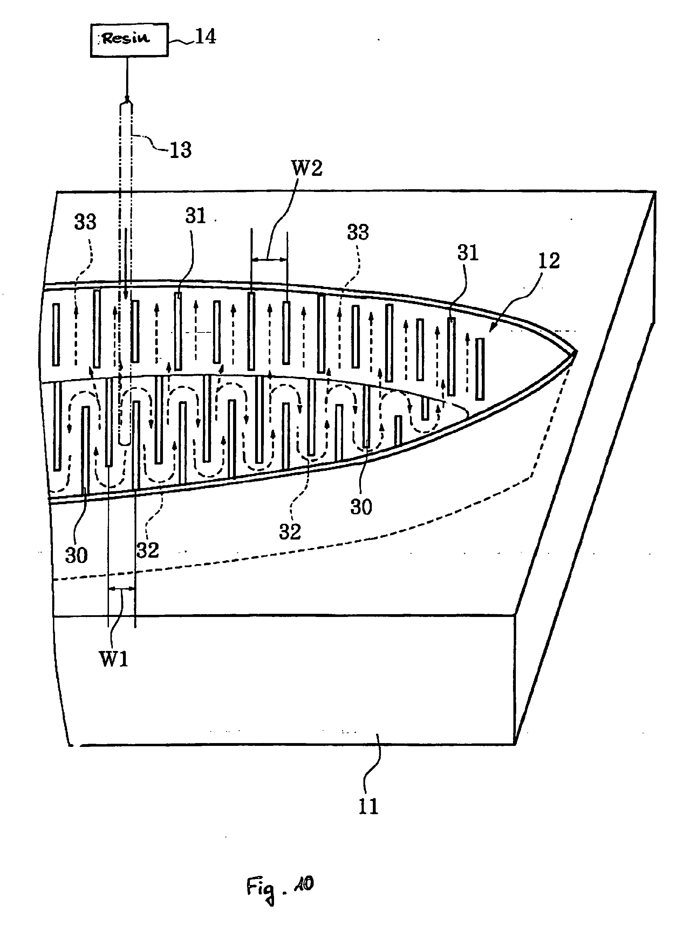

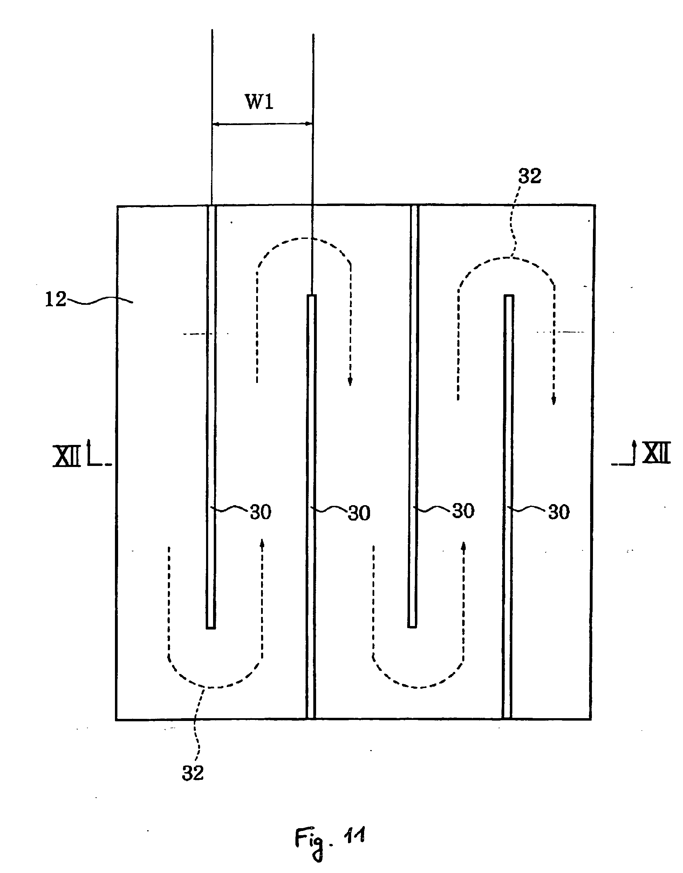

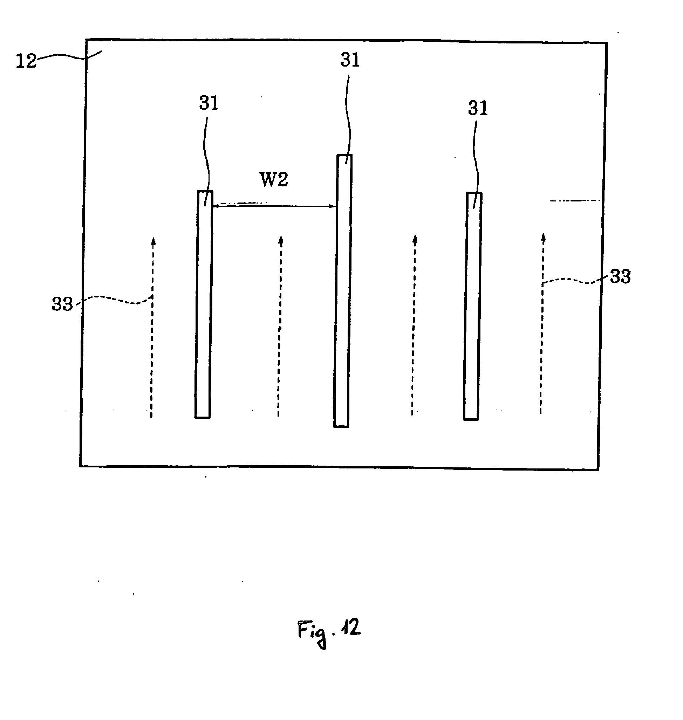

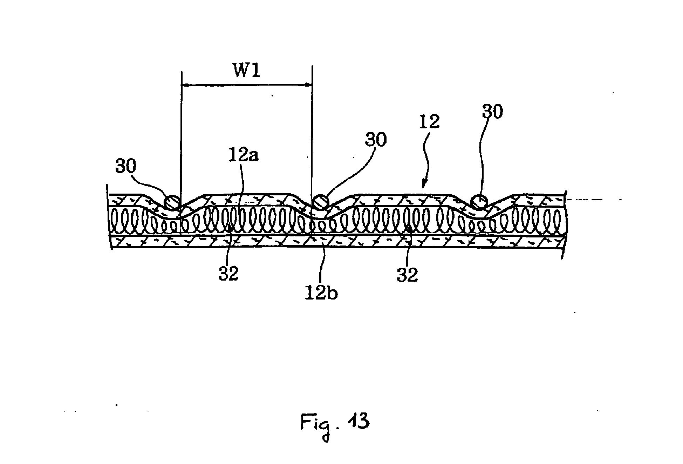

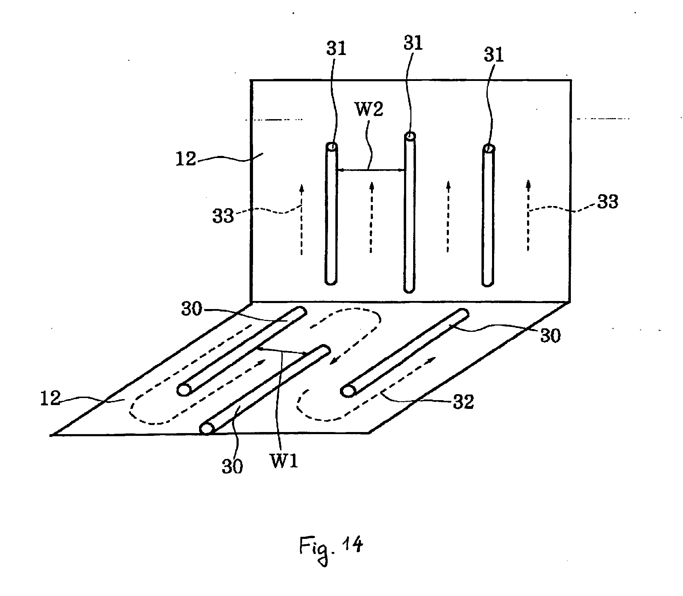

FIG. 10 shows a perspective view of the mold in which the arrangement of the fiber mat 12 in the mold 10,11 has been shown. As can be seen from the FIG. 10 to 14, members 30, 31 for forming resin flow passages 32, 33 are provided in determined intervals W1. W2 to each other at one side of and on one of the two surface fiber layers 12b of the fiber mats 12 so that the injected resin 14 flows within the resin flow passages 32, 33 through the fiber mats 12. Here respective adjacent members 30, 31 for forming resin flow passages 32, 33 comprise different length and are arranged offset to each other. Thus, through such an arrangement of the members 30, 31 for forming resin flow passages 32, 33 an improved flow of the injected resin 14 has been given.

In these preferred embodiments shown in FIG. 10 to 14, for example, the resin flow supporting means and, accordingly, the members 30, 31 for forming resin flow passages 32, 33 are constructed by strip-shaped glass strings. The compressibility after pressurization is changed so that resin flow passages 32, 33 as shown by the arrows can be easily formed on a surface of the fiber mat 12. Moreover, the direction of the resin flow on the fiber mat 12 is controlled. In this manner, the resin 14 can flow smoothly, so that an article having a complicated shape can be produced.

As mentioned above and shown in the FIGs of the preferred embodiments, the connection part 12c and, accordingly, the resin flow supporting means are constructed by connecting the overlapping portions of the end portions of the fiber mats 12 with a connecting fiber mat 21. With this simple structure, the end portions can be firmly connected together. The end portions are connected together with the connecting fiber mat 21 so that the resin can smoothly flow therethrough.

Furthermore, the connection part 12c and, accordingly, the resin flow supporting means could be constructed by disposing through-holes 22 in the overlapping portions of the end portions of the fiber mats 12. By forming the through-holes, the resin is allowed to flow easily and smoothly.

Thus, by providing the connection part 12c and, accordingly, the resin flow supporting means in the overlapping portions of the plural fiber mats 12, the resin for impregnation is allowed to flow smoothly therethrough. As a consequence, a large-sized fiber reinforced resin article can be formed without causing reduction of strength.

## Claims

1. A method of molding a fiber reinforced resin article (1), comprising the steps of:
- placing at least one fiber mat (12) consisting of two surface fiber layers (12b) and a middle fiber layer (12a) in a mold (10,11);
- injecting a resin (14) into said mold (10,11); and
- impregnating said fiber mat (12) with said resin (14) to form said article (1),
**characterized by** disposing plural fiber mats (12) in said mold (10,11) so that end portions thereof overlap mutually, and forming a connection part (12c) in said fiber mat (12) so as to allow a flow of said resin (14) therethrough, wherein said connection part (12c) consists of a sewing of overlapping portions or a cut (12c1) in two adjacent surface fiber layers (12b), or of a connecting fiber mat (21) or a through-hole (22) or of a member (22,23) penetrating said fiber layers, or of a member (30,31) placed on one of the surface fiber layers (12b) of the fiber mat (12) for forming resin flow passage (32,33).

2. A fiber reinforced resin article (1) comprising a plurality of fiber mats (12) embedded in said resin body, **characterized in that** end portions of said fiber mats (12) are overlapped mutually with one another, and resin flow supporting means is provided in an area of said overlapping end portions of said fiber mats (12), wherein said resin flow supporting means is a sewing of overlapping portions, or a cut (12c1) in two adjacent surface fiber layers (12b), or a connecting fiber mat (21), or a through-hole (22), or a member (23) penetrating said fiber layers, or a member (30,31) placed on one of the surface fiber layers (12b) of the fiber mat (12) for forming resin flow passage (32,33).

3. A fiber reinforced resin article (1) according to claim 2, **characterized in that** said fiber mat (12) consists of two surface fiber layers (12b) and a middle fiber layer (12a).

## Patentansprüche

1. Verfahren zum Gießen eines faserverstärkten Kunststoffteiles (1), mit den Schritten des:
- Anordnens zumindest einer Fasermatte (12), die aus zwei Oberflächen-Faserlagen (12b) und einer mittleren Faserlage (12a) besteht, in eine Form (10,11,12);
- Einspritzen eines Kunstharzes (14) in die Form (10,11); und
- Imprägnieren der Fasermatte (12) mit dem Kunstharz (14), um den Gegenstand (1) zu bilden,
**gekennzeichnet durch** Anordnen einer Mehrzahl von Fasermatten (12) in der Form (10,11), so daß Endabschnitte derselben einander gegenseitig überlappen, und Ausbilden eines Verbindungsteiles (12c) in der Fasermatte (12), um so eine Strömung des Kunstharzes (14) **durch** diesen hindurch zu gestatten, wobei der Verbindungsteil (12c) aus einem Vernähen von überlappenden Abschnitten oder einem Schnitt (12c1) in zwei benachbarten Oberflächen-Faserlagen (12b) oder aus einer verbindenden Fasermatte (21) oder einer Durchgangsöffnung (22) oder aus einem Teil (22, 23), das die Faserlagem durchdringt oder aus einem Teil (30, 31) besteht, das auf einer der Oberflächen-Faserfagen (12b) der Fasermatte (12) angeordnet ist, um einen Kunstharzströmungskanal (32, 33) auszubilden.

2. Faserverstärkter Kunstharzgegenstand (1) mit einer Mehrzahl von Fasermatten (12), die in dem Kunstharzkörper eingebettet sind, **dadurch gekennzeichnet, daß** Endabschnitte der Fasermatten (12) miteinander gegenseitig überlappend sind und die Kunstharzströmungs-Unterstützungseinrichtung in einem Bereich der überlappenden Endabschnitte der Fasermatten (12) vorgesehen ist, wobei die Kunstharzströmungs-Unterstützungseinrichtung ein Vernähen von überlappenden Abschnitten, oder ein Schnitt (12c1) in zwei benachbarten Oberflächen-Faserlagen (12b) oder eine verbindende Fasermatte (21) oder eine Durchgangsöffnung (22) oder ein Teil (23), das die Faserlagen durchdringt, oder ein Teil (30,31) ist, das auf einer der Oberflächen-Faserlagen (12b) der Fasermatte (12) angeordnet ist, um einen Kunstharz-Strömungskanal (32,33) zu bilden.

3. Faserverstärkter Kunstharzgegenstand (1) nach Anspruch 2, **dadurch gekennzeichnet, daß** die Fasermatte (2) aus zwei Oberflächen-Faserlagen (12b) und einer mittleren Faserlage (12a) besteht.

## Revendications

1. Procédé de moulage d'un article en résine renforcée par des fibres (1), comprenant les étapes consistant à :
- placer au moins un mat de fibres (12) constitué de deux couches de fibres superficielles (12b) et d'une couche de fibres médiane (12a) dans un moule (10,11) ;
- injecter une résine (14) dans ledit moule (10,11) ; et
- imprégner ledit mat de fibres (12) avec ladite résine (14) pour former ledit article (1),
**caractérisé par** le fait de disposer plusieurs mats de fibres (12) dans ledit moule (10,11) de façon à ce que leurs parties terminales se chevauchent mutuellement, et de former une pièce de raccordement (12c) dans ledit mat de fibres (12) afin de permettre un écoulement de ladite résine (14) à travers celle-ci, dans lequel ladite pièce de raccordement (12c) est constituée d'une couture de parties se chevauchant, ou d'une découpe (12c1) dans deux couches de fibres superficielles adjacentes (12b), ou d'un mat de fibres de raccordement (21), ou d'un trou débouchant (22), ou d'un élément (22,23) pénétrant dans lesdites couches de fibres, ou d'un élément (30,31) placé sur l'une des couches de fibres superficielles (12b) du mat de fibres (12) pour former un passage pour l'écoulement de résine (32,33).

2. Article en résine renforcée par des fibres (1), comprenant une pluralité de mats de fibres (12) incorporés dans ledit corps de résine, **caractérisé en ce que** les parties terminales desdits mats de fibres (12) se chevauchent mutuellement, et un moyen favorisant l'écoulement de résine est prévu dans une zone desdites parties terminales se chevauchant desdits mats de fibres (12), dans lequel ledit moyen favorisant l'écoulement de résine est une couture de parties se chevauchant, ou une découpe (12c1) dans deux couches de fibres superficielles adjacentes (12b), ou un mat de fibres de raccordement .(21), ou un trou débouchant (22), ou un élément (23) pénétrant dans lesdites couches de fibres, ou un élément (30,31) placé sur l'une des couches de fibres superficielles (12b) du mat de fibres (12) pour former un passage pour l'écoulement de résine (32,33).

3. Article en résine renforcée par des fibres (1) selon la revendication 2, **caractérisé en ce que** ledit mat de fibres (12) est constitué de deux couches de fibres superficielles (12b) et d'une couche de fibres médiane (12a).
